Europäisches Patentamt

European Patent Office

Office européen des brevets

(11) Publication number: **0 178 272**
**A1**

(12) # EUROPEAN PATENT APPLICATION

(21) Application number: **85850275.0**

(22) Date of filing: **04.09.85**

(51) Int. Cl.⁴: **A 22 C 21/06**

(30) Priority: **07.09.84 AU 7013/84**

(43) Date of publication of application: **16.04.86**
**Bulletin 86/16**

(84) Designated Contracting States: **AT BE CH DE FR GB LI LU NL SE**

(71) Applicant: **Lindholst & Co. (Australia) Pty. Limited, 49 Prince William Drive, Seven Hills New South Wales 2147 (AU)**

(72) Inventor: **Camilleri, Mario Paul, 200 Girraween Road, Girraween New South Wales, 2145 (AU)**

(74) Representative: **Roth, Ernst Adolf Michael et al, GÖTEBORGS PATENTBYRA AB Box 5005, S-402 21 Göteborg (SE)**

(54) **Eviscerating spoon.**

(57) An evisceration spoon (8) has a stem (30) joined to one end of an elongated loop (33) lying in one plane and sized to allow the intestinal pack (13) of a fowl eviscerated to drop through the loop during upward drawing movement of the pack from an inverted decapitated fowl (3) being eviscerated. The lower end of the loop has a pair of divergent fingers (36) defining between them a notch (40) for catching the fowl's osophagus (15) and for picking up the crop (14) of the fowl. The stem is set an obtuse angle to the loop so that the spoon has a cranked appearance.

EVISCERATING SPOON

THIS INVENTION relates to an evisceration spoon used to remove an intestinal pack from a fowl, such as a chicken previously prepared for drawing. The intestinal pack comprises edible offal, such as the gizzard, liver and heart, and inedible offal such as the intestine, gall bladder and crop.

The stripping of the intestinal packs from chickens on an industrial scale involves the use of apparatus which receives de-feathered carcasses from which the heads and feet have been removed and which have been prepared by the formation of a circular slit cut around the fowl's cloaca (vent) and an opening cut through the skin at the back of the fowl and extending between its breastbone and its backbone. The carcasses are held by their legs against the outside of an axially vertical drum provided with mechanisms for correctly positioning the fowls for evisceration, and equipped with automatically operating eviscerating spoons which dip down through the opening cut and scoop the intestinal pack from the interior cavity of the carcass. The pack is then left hanging from the carcass for inspection to establish that the fowl is fit for human consumption.

It is important that constituents of the intestinal pack are not ruptured during the evisceration process and rigorous inspection procedures are used to reject carcasses damaged by such rupturing. The edible offal, for example, has a significant market value but its constituents, particularly the liver, can be easily damaged and lose value in consequence. Likewise, perforation of the gall bladder will result in pungent, discoloring and distasteful gall juices being released over the carcass to spoil it. Damage to the carcass also results if the crop bursts. For these reasons improvements in the design of evisceration spoons which reduces the number of fowls failing to pass inspection are of economic importance.

An object of this invention is to provide an improved design of evisceration spoon.

An evisceration spoon, in accordance with the present invention, has a cranked end-portion shaped to conform generally to a vertical profile of the interior cavity of the fowl behind the breastbone, the end-portion comprising a stem attached to one end of an elongated loop lying in a single plane and being dimensioned to allow the intestinal pack to hang through the loop during drawing, the loop being provided at its end remote from the stem with a pair of forwardly-directed fingers having rounded ends so as not to damage the intestinal pack or the carcass during the drawing operation and defining between them a narrow deep notch for catching the fowl's osophagus so that the crop is picked up and held during the upward drawing movement of the intestinal pack from the cavity.

The spoon of the invention differs from previously used spoons in that the loop and the forwardly extending fingers extend in the same general direction. Previously, loops have either not been used in evisceration spoons or, if used, were formed in two planes so that the forward part of the loop dipped down and had at its forward end a pair of upwardly-directed teeth defining between them a wide "V" in which was gathered the portions of the intestinal pack adhering to the side wall of the cavity opposite the breastbone.

Preferably the fingers curve gently upwards from the underside of the loop and their rounded ends provide part-spherical protuberances on the upper side of the spoon.

The invention will now be described in more detail, by way of example, with reference to the accompanying partly diagrammatic informal drawings, in which:-

FIGURE 1 is a side elevation of a Linco Automatic Eviscerator of known type and showing an arcuate tier of inverted chickens which are in progressive stages of evisceration;

FIGURE 2 is a vertical section through a carcass of a chicken being eviscerated by a spoon of the invention; and,

FIGURE 3 shows in plan, side and end elevation, an eviscerating end-portion of the spoon of Figure 2.

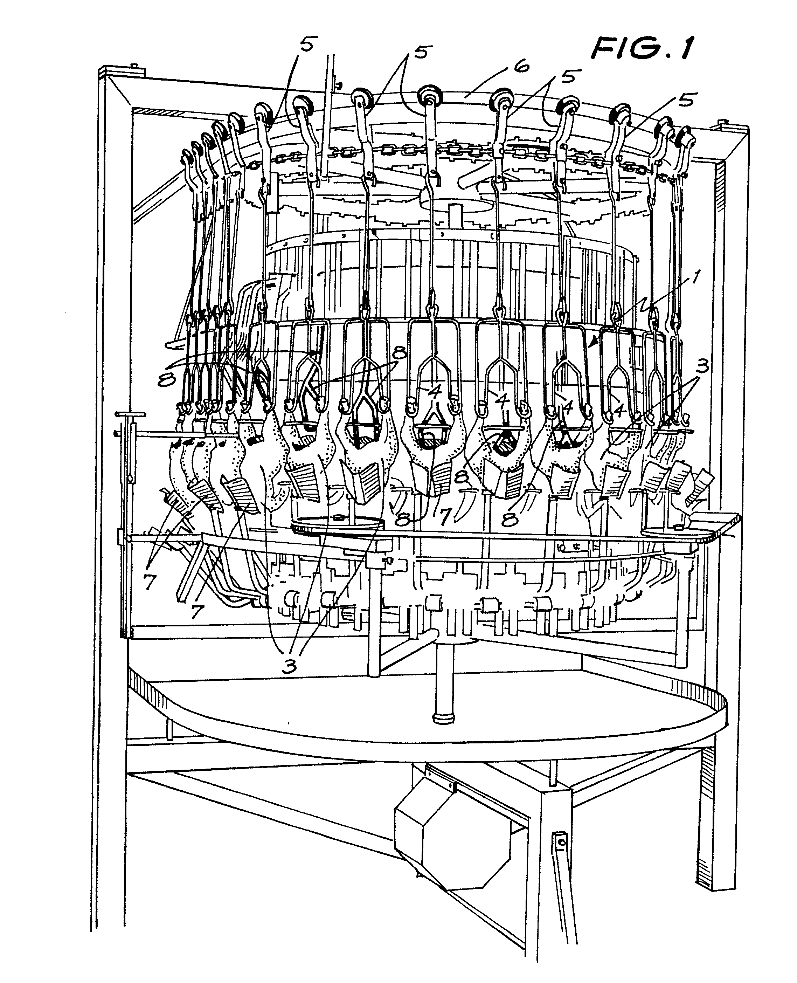

The apparatus shown in figure 1 is made by Lindholst & Co. A/S of Denmark and comprises an axially vertical drum 1 which is rotated about its axis and carries with it an arcuate tier of chicken carcasses 3 supported in inverted positions by respective stirrups 4 hanging from runners 5 travelling around a rail 6. The carcasses are supported against the drum by having their breastbones cupped in plates 7 so that they cannot move while evisceration is being carried out.

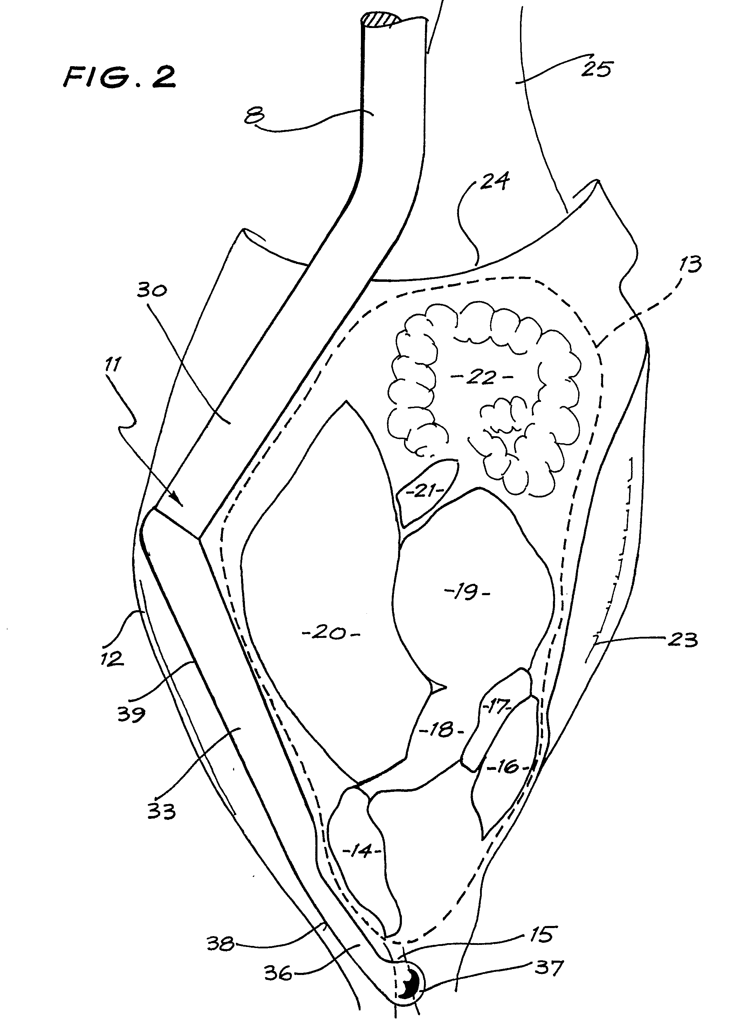

The drum 1 is provided above the carcasses with evisceration spoons 8 which are each guided by cams (not shown) to follow an arcuate path causing the lower end-portion of the spoon to progressively dip into the carcass interior behind the breastbone as shown in figure 2. The spoon then simultaneously moves away from the breastbone and upwardly to detach and lift an intestinal pack 13 from the carcass as shown in figure 2. For convenience the pack 13 is shown within the dotted outline. It comprises the following constituents crop 14, osophagus 15, lungs 16, heart 17, glandular stomach 18, gizzard or muscular stomach 19, liver 20, gall bladder 21 and coiled intestine 22. The positions these constituents of the intestinal pack occupy are largely as shown, except that the lungs may be on the left or right

0178272

of the carcass. A backbone of the carcass is shown at 23, and an opening cut, through which the pack is lifted by the spoon, is shown at 24. One thigh of the bird is shown at 25.

The eviscerating spoon 8 partially shown in figure 2 is made from stainless steel and has its lower end-portion cranked at 11 to impart to it a shape which fits behind the chicken's breastbone 12 and to one side of its intestinal pack 13.

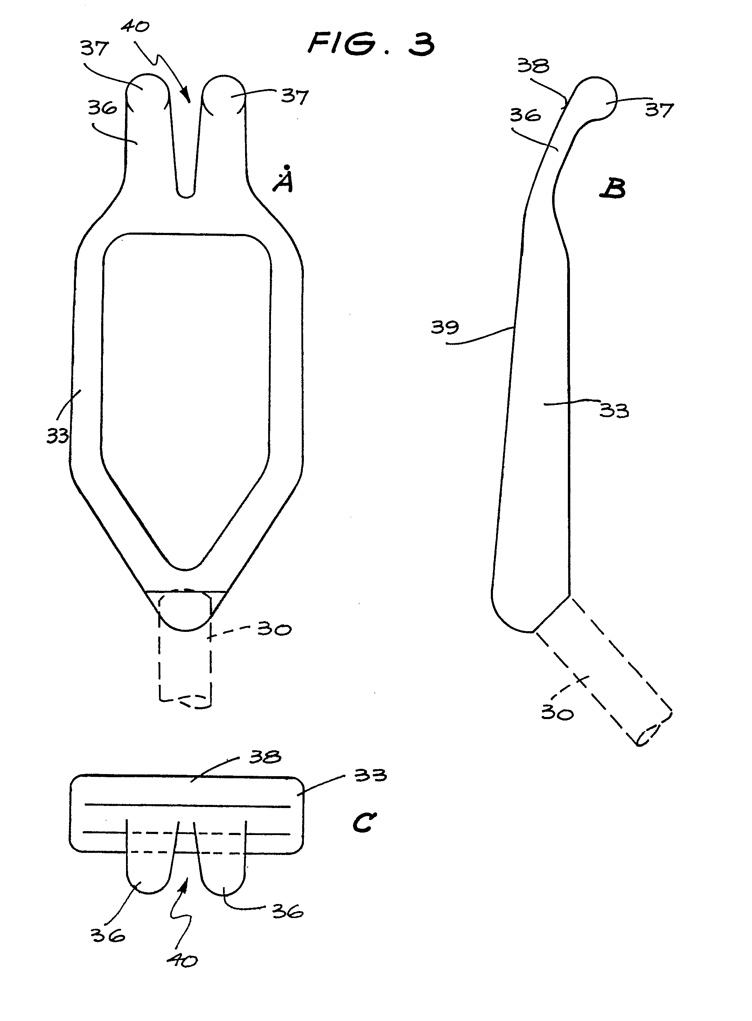

The cranked lower end-portion of the spoon comprises three parts. The first part comprises a section 30 of the spoon stem 8. It is welded to the rear end of the second or intermediate part is formed as a closed, pentagon shaped, elongated loop 33, shown in the plan view (sketch A) of figure 3. The loop 33 lies entirely in one plane as shown in sketch B, and its thickness diminishes towards its forward end shown uppermost in sketch B. The third part of the spoon is formed by a pair of slightly flattened fingers 36, having enlarged rounded protuberances 37 at their respective ends and gently curved undersides 38 which slope slightly upwards out of the plane of the underside 39 of the loop 33 as shown in figure 2. A deep narrow notch 40 is formed between the fingers 36.

The apparatus operates as follows:

Inverted chicken carcasses prepared for drawing, as already described, are carried around the drum 4 as shown in figure 1 with their breastbones on the outside. They are progressively positioned for drawing, by being cupped by the plates 7 against the side of the drum, and the eviscerating spoons are moved downwardly to dip into respective carcasses along curved operating paths by cams (not shown). This movement brings the cranked lower end-portion of each spoon downwardly so that it enters an opening cut in the top of

the inverted carcass, fingers 36 foremost, and then travels downwardly around the inside surface of the breastbone to the position shown in figure 2. The motion of the spoon then continues across the carcass interior so that the fingers 36 gather in the notch 40 between them the birds osophagus. The fingers 36 then travel up the backbone of the carcass so that the intestinal pack 13 is gathered over the centre of the spoon and drawn out through the top of the carcass. During the upward travel of the spoon, the lungs 16 are either freed from the carcass by the spoon so that they are lifted with the rest of the intestinal pack 13, or are loosened to the extent that they are withdrawn at a later stage in the lifting process when the crop 14 is pulled.

The drawing can be performed with little risk of damage to the intestinal pack 13 because the opening in the loop 33 allows the pack to hang through the spoon instead of bulging over its edges at positions where it is prone to damage from being crushed between the sides of the spoon and the inside wall of the carcass cavity.

When drawing is completed and the spoon has reached the end of its operating movement, an adjustable cam action performed by the apparatus pushes the spoon away from the carcass so that the intestinal pack is released from the spoon's end-portion and left dangling over the side of the carcass for quality control inspection.

Because the crop 14 has been engaged and pulled at the bottom of the operating arc of movement of the spoon, the osophagus 15 is either completely released from inside the carcass by being trapped in the notch 40, or has been so loosened that its subsequent complete removal can be easily effected later in the drawing process, by a gentle manual pulling action on the osophagus 15 between the glandular stomach 18 and the crop 14.

CLAIMS

1. An evisceration spoon having one end-portion formed with a stem joined to a loop having at its end opposite the stem a pair of fingers, <u>characterised in that</u> the loop (33) is elongated and lies in one plane which makes an obtuse angle with the stem (30), and the fingers (36) have rounded ends (37) and diverge from one another to provide between them a deep sharp notch (40) for catching the osophagus of a fowl being eviscerated.

2. A spoon as claimed in Claimed 1, characterised in that the undersides (38) of the fingers (33) are gently convexly curved and merge with the underside (39) of the loop (33).

3. A spoon as claimed in Claim 1 or Claim 2, characterised in that the thickness of the loop (33) diminshes progressively towards its end from which the fingers (36) extend.

4. A spoon as claimed in any one of the preceding claims, characterised in that the fingers terminate in rounded protuberances (37) disposed on their sides beneath the stem (30).

5. A spoon as claimed in any one of the preceding claims, characterised in that the lengths of the fingers (36) approximates to the width of the loop (33) whose length is approximately twice its width.

FIG.1

FIG. 2

2/3

0178272

3/3

0178272

# FIG. 3

A

B

C

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 382 314 (GRAHAM) <br> * Column 6, lines 7-14; figure 3 * | 1 | A 22 C 21/06 |
| A | | 3 | |
| Y | DE-A-2 355 827 (MEYN) <br> * Page 8, lines 4-7; page 9, last paragraph; page 10, line 8; figure 5 * | 1 | |
| A | | 4 | |
| A | US-A-4 262 387 (SCHEIER) <br> * Column 3, lines 23-28; column 6, lines 32-38; figures 3,10 * | 1,3,4 | |
| A | US-A-4 435 878 (TIELEMAN) <br> * Column 4, lines 12-68 * | 1,3 | TECHNICAL FIELDS SEARCHED (Int. Cl.4) <br><br> A 22 C |
| A | NL-A-8 104 877 (TIELEMAN) | | |
| A | NL-A-7 700 919 (JOHNSON) | | |

The present search report has been drawn up for all claims

| Place of search <br> THE HAGUE | Date of completion of the search <br> 22-11-1985 | Examiner <br> DE LAMEILLIEURE D. |
|---|---|---|